# EUROPEAN PATENT APPLICATION

(11) **EP 1 273 960 A1**
(43) Date of publication of application: **08.01.2003**
(21) Application number: 01115860.7
(22) Date of filing: 28.06.2001
(51) Int. Cl.: G02F 1/035, G02F 1/225

(54) **Integrated ferroelectric optical waveguide device**

(71) Applicant: Corning O.T.I. S.p.A., 20126 Milano (IT)
(72) Inventor: Pruneri, Valerio, 23033 Grosio (SO) (IT); Vannucci, Antonello, 00198 Roma (IT)
(74) Representative: Grunfeld, David Peter

(57) **Abstract**

An integrated optical waveguide device comprises: a substrate **(10)** of a ferroelectric material; at least one waveguide (**13;13A,13B**) integrated in the substrate in correspondence of a surface **(11)** thereof; at least a longitudinal section **(13;131,132,133;13A,13B)** of the at least one waveguide is formed in a respective first substrate region **(14;141,142,143;14A,14B;140A,140B;140C,140D)** having a first orientation of spontaneous polarization. The first substrate region is sandwiched between at least two second substrate regions **(15,16;151,161,152,162,153,163;15A,15B,17A,17B,16A,16B;150,1 60)** which have a second orientation of spontaneous polarization, opposite to the first orientation, and are located at opposite sides of the waveguide section with respect to a longitudinal direction thereof.

## Description

The present invention relates generally to the field of integrated optics. More specifically, the invention relates to integrated optical waveguide devices in which optical beams propagate through optical waveguides integrated in a substrate material. Particularly, but not limitatively, the invention relates to electro-optical modulators, that are devices whose operation is based on the electro-optic effect. Examples of such devices are phase modulators or intensity modulators, for instance interferometric modulators of the Mach-Zehnder type.

Integrated optical waveguide devices, such as modulators and switches, are often fabricated on substrates of ferroelectric materials. Among all the known substrate materials, lithium niobate (LiNbO₃) is probably the most widely used because of the remarkable electro-optic properties thereof and the possibility it offers of forming low loss optical waveguides. Another known substrate material is for example lithium tantalate (LiTaO₃).

The electro-optic effect is a second-order non-linear property which is characterised by a tensor. This tensor relates the polarization changes at optical frequencies (*i.e.,* refractive index changes) of the material to low-frequency modulating electric fields, that is modulating electric fields at frequencies much lower than those of the optical fields. Phase and amplitude modulation of optical fields can be obtained by applying external electric fields, which modify the material refractive index via the electro-optic effect.

Overlooking, for simplicity, the tensorial nature of the electro-optic effect, the refractive index change Δn(ω) at the optical frequency ω is proportional to the product of an electro-optic coefficient r and the modulating electric field Eo: Δn(ω) ∝ r·Eo.

In the case of a LiNbO₃ crystal the electro-optic coefficient having the highest value is r₃₃ ≈ 30 pm/V. The electro-optic coefficient r₃₃ relates the refractive index change experienced by electromagnetic waves polarised along the c crystal axis (also called z crystal axis, whose direction and orientation coincide with those of the spontaneous polarization of the crystal) to the component of the modulating electric field along the same axis.

For this reason LiNbO₃ crystal substrates are generally made available in z-cut slices, with the z crystal axis normal to the surfaces of largest area, since this configuration is the one ensuring superior modulation performances even at relatively high modulation frequencies.

In addition to the electro-optic properties, ferroelectric materials show other properties such as pyroelectricity, piezoelectricity and photorefractivity.

As known, the pyroelectric effect is a change in spontaneous polarization of the material due to relatively quick temperature drifts, while the piezoelectric effect is a change in spontaneous polarization due to mechanical stresses causing material deformation. By photorefractive effect, optically induced changes in the refractive index are intended.

These properties can have a detrimental effect on the integrated optics devices, preventing them from performing the desired functions.

Free or polarization charges can in fact be generated in the ferroelectric material substrate when it is subjected to changes of parameters such as temperature drifts, mechanical stresses and short wavelength light intensity. These charges may induce a substantial electric field in the regions of the substrate where the optical waveguides for the propagating optical modes are located.

Through the electro-optic effect these electric fields give rise to substantial refractive index changes. The effect of these electric fields on the refractive index is similar to that of the modulating electric field: if E is the electric field induced in the material by the free or polarization charges, the change in the refractive index at the optical frequency ω is Δn (ω) ∝ r·E.

In particular, the electric fields along the z axis of the crystal are those more relevant because they produce refractive index changes along the z-axis itself, along which the electromagnetic waves are usually polarized to experience maximum electro-optic modulation.

In lithium niobate the superior electro-optic properties are accompanied by stronger pyroelectric, piezoelectric and photorefractive properties compared to other ferroelectric materials. Moreover, in lithium niobate the pyroelectric fields, *i.e.* the electric fields generated in the material by the pyroelectric effect, are directed along the z crystal axis, which as mentioned is also the axis showing the highest electro-optic coefficient.

As an example of a typical situation, let a Mach-Zehnder type integrated waveguide electro-optic modulator be considered. Such a device is widely used in integrated optics, for instance because it allows to modulate the intensity of an optical beam.

Changes of temperature, mechanical stresses, irradiation by light determine the appearance of free or polarization charges and consequently electric fields may be created in the region of the substrate where the interferometer arms are formed. These charges induce by electro-optic effect refractive index changes which modify the optical modes propagation through the waveguides. In other words, the propagation of the optical modes through the interferometer arms is influenced not only by the applied modulating electric fields but also by the electric fields generated by the piezoelectric and/or pyroelectric effects. These changes give rise to the so called DC-drift in the optical response of the device, whereby the optical response of the device changes with a long-term time constant.

When the temperature changes or the mechanical stresses are slow enough, the external fields (generated by fringe effects or non-perfect screening of charges of opposite sign) may attract enough free charges to the substrate surfaces, which compensate for, or in other words "screen", the internal polarization charges. Compensation of the internal polarization charges may also be due to currents through the crystal associated with bulk conductivity. In this way a quasi-neutral situation is restored and the electric fields reduced.

The situation is different when there are changes in temperature and/or stresses which are relatively fast, thus preventing the charge compensation process to take place.

In addition, asymmetries in the geometrical structure of the modulator (for example in the position of the two waveguiding arms with respect to the metal electrodes) can create a non-uniform influence of the pyroelectric and/or piezoelectric effects, thus making the changes in device response more dramatic and difficult to control.

In order to provide an idea of the impact of these effects, let a substrate be considered of z-cut lithium niobate, with waveguides regions located under one of the surfaces perpendicular to the z crystal axis. Let it be supposed that the substrate is subjected to pyroelectric effect (the reasoning can be extended to other effects which produce charges in a similar manner). If there is a relatively quick temperature change there will be the formation of an uncompensated surface charge density of the order of -4x10⁻⁵ C/K·m². The negative sign of this coefficient implies that the z+ surface of the crystal (*i.e.,* the surface towards which the z axis is oriented) will be populated by polarization charges of negative sign when the temperature increases, whereas the opposite z-surface will become 'positive'. The opposite is true for a decrease in temperature. As a consequence of this surface charge distribution, an electric field E will be induced along the z crystal axis, which will be uniform inside almost the whole crystal. In fact there will be fringe-field effects at the edge of the substrate, but these non-uniformities do not affect significantly the waveguide regions, which are usually located far from the substrate edges. The substrate itself is usually relatively large compared to its thickness. The electric field E can thus be considered uniform and directed along the z axis in the waveguide regions, with an amplitude of approximately 1.6x10⁵ V/m for each K degree of temperature change.

Several solutions have been proposed to suppress the DC drift phenomenon due to pyroelectric or piezoelectric effects.

Some of the proposed solutions call for using conductive material films which contain mobile charges to produce a fast redistribution of charges, hence the reduction or suppression of detrimental fields.

For example, US 5,621,839 describes an optical waveguide device having a substrate made of an x-cut ferroelectric crystal such as LiNbO₃, LiTaO₃, Li(Nbₓ,Ta₁₋ₓ)O₃, with an optical waveguide formed on one major plane of the x-cut substrate. A first and a second conductive layers are respectively formed on the z- and z+ substrate crystal planes. The first and second conductive layers are electrically connected via a conductive layer formed on the major plane.

In other words, the z+ and z- substrate faces, *i.e.* the substrate faces perpendicular to the z crystal axis, along which the pyroelectric fields develop, are covered with conductive materials and are connected through a conductive path.

This solution is quite straightforward for x-cut substrates, in which the optical waveguides are integrated in correspondence of one of the substrate faces perpendicular to the x crystal axis. However, devices formed in x-cut substrates are less efficient, in terms of electro-optic response, than devices made in z-cut substrates, in which the waveguides are integrated in correspondence of one of the z faces of the substrate.

The implementation of the above solution to these latter devices is difficult, because one of the surfaces which should be covered by a conductive material is also the surface on which driving electrodes for applying the modulating electric fields are placed. In this case, special materials must be used and/or special treatments must be contemplated.

For example, in US 5,153,930 a device employing a substrate of a material that exhibits the pyroelectric effect is described. The device is manufactured forming two diffused titanium waveguides in a substrate of z-cut monocrystalline LiNbO₃. A buffer layer of SiO₂ is then formed over the front substrate surface. A thin film of titanium in a highly conductive state is deposited over the buffer layer, and a layer of Al is deposited over the thin film of titanium and patterned to define two discrete electrodes and a ring extending around the periphery of the thin film of titanium. A layer of Al is also deposited over the back substrate surface. The structure is then baked in an atmosphere of oxygen and nitrogen at temperatures in excess of about 250°C. During the baking, the exposed portions of the thin film of titanium are converted to a high resistivity state. A stripe of conductive paint is then applied to the side of the substrate to connect the ring to the Al layer deposited over the back surface. When a temperature change causes a pyroelectric field to be generated between the faces of the substrate, the stripe of conductive paint allows charge to be redistributed between the ring and the front and back Al layers to produce a counteracting field so that there is no net field in the substrate. This occurs within a time on the order of milliseconds, therefore the time required to achieve equilibrium between the pyroelectric field and the field due to surface charge is very short, and for most purposes no instability in performance of the switch due to change in temperature is observed.

In other words, the idea is that the top layer, where exposed, is conductive enough to allow for pyroelectric compensation, without inducing too high dissipation of the power applied to the electrodes.

However, a certain amount of power is inevitably dissipated, due to the fact that the resistance between the electrodes is finite and thus a certain amount of electrical current flows between the electrodes.

Additionally, the presence of electrical currents in between the electrodes may affect the reliability of the device, for instance by altering the composition via formation of oxides.

US 5,214,724 describes an optical waveguide device using a substrate of z-cut lithium niobate in which a semiconductive layer of silicon, acting as a conductor in a low frequency band, is formed between the buffer layer of silicon dioxide and the driving electrodes and all over the buffer layer, so as to make uniform a distribution of surface charges occurring due to a change in temperature or the like and stabilize the characteristics of the optical waveguide device. Essentially, the silicon layer behaves as a conductor for low frequencies fields, such as those induced by pyroelectric effect, and as a dielectric for the higher frequency modulating fields.

In other words, the attempt in this case is to make the electric field uniform in the waveguides.

Similarly to the previous solution, a certain amount of power is inevitably dissipated, since the semiconductive layer has a finite resistance also at the frequency of the modulating fields, and the presence of electrical currents in between the electrodes may affect the device reliability, *e.g.* by altering the composition via formation of oxides.

As mentioned before, changes in the refractive index of a ferroelectric material can also be induced optically, due to the photorefractive effect. In this case, charges are generated via the photovoltaic effect, and via the electro-optic effect the resulting electric fields cause changes in the refractive index.

The photorefractive effect has been studied in a different context, specifically in connection with lithium niobate laser-diode-based second harmonic generation (SHG) devices. As reported in V. Pruneri et al., 'Self-organised light-induced scattering in periodically poled lithium niobate', Appl. Phys. Lett., vol. 67, p. 1957 (1995), M. Taya et al., 'Photorefractive effects in periodically poled ferroelectrics', Optics Letters, vol. 21, p. 857 (1996) and B. Sturman et al., 'Mechanism of self-organised light-induced scattering in periodically poled lithium niobate', Appl. Phys. Lett., vol. 49, p. 1349 (1996), lithium niobate with periodic poling, that is periodic domain inversion, not only ensures quasi-phase-matching of non-linear optical processes, but it also reduces beam distortions caused by photorefractive effect. The mechanism behind this reduction consists in the fact that the photovoltaic current follows the direction of the z axis, so that a periodic-sign spatial charge distribution is created on the sides of the laser beam. This implies that the electric field along the z axis is significantly reduced when the beam size is bigger than the period of the structure. In fact an electric field modulation still exists over a depth (from the side of the laser beam) comparable to the period of the periodic domain structure.

In US 5,278,924 periodic poling has been proposed in connection with electro-optic modulators as a way for compensating phase velocity mismatches between optical modulation and an RF electric signal. More specifically, an integrated optic Mach-Zehnder interferometer with an asymmetric coplanar waveguide travelling wave electrode is formed in a substrate which has a ferroelectric domain that has inverted regions and non-inverted regions. The inverted and non-inverted regions extend parallelly to each other transversally to the interferometer arms, that is transversally to the waveguides, in alternated succession along the arms. The optical signal in each interferometer arm passes through the inverted and non-inverted regions of the ferroelectric domain. Each transition between inverted and non-inverted regions changes the sign of the induced phase modulation of the optical signal. This compensates for 180° phase difference between the modulation on the optical signal and the RF electric signal caused by the phase velocity mismatch between the RF and optical signals.

In US 6,055,342 ferroelectric domain inversion is exploited in an integrated optical intensity modulator to make the refractive index of an optical waveguide discontinuous with a staggered pattern, so that the light wave distribution mode is asymmetrical with respect to the center of the waveguide, to modulate a light wave with low insertion loss and a low driving voltage. Domain-inversion areas having domain reverse from the direction of spontaneous polarization of the substrate are arranged in a staggered pattern around the optical waveguide, with boundaries between domain-inversion areas and spontaneous polarization areas being at the center of the optical waveguide.

JP 07-191352 discusses the problems of an optical waveguide device, such as a directional coupling optical switch, in which mutual exchange of wave energy between the waveguides takes place. The device comprises a crystal substrate formed from a z-cut LiNbO₃ crystal, in which two optical waveguides are formed adjacent and parallel in the substrate surface. The device has a coupling region, that is the region of the substrate wherein the mutual exchange of wave energy between the waveguides takes place. Positive and negative electrodes are formed on the same substrate surface as the optical waveguides, with interposition of a buffer layer, and extend parallelly to each other in partial overlap with a respective waveguide. An electric field which curves toward the negative electrode from the positive electrode is generated, which has an action in approximately reverse directions, with respect to the z crystal axis, in the two waveguides.

According to JP 07-191352, in this configuration the direction of action of the electric field in the two optical waveguides is only approximately reverse, so there is a large loss of electric field action compared to a case of perfectly reverse directions. In addition, in order to ensure the most effective action of the electric field on both optical waveguides, fine position adjustment is necessary, by way of example edge sections of the electrodes are matched to the optimum position in the central region of the optical waveguide device so that the dense section of the electric field is concentrated on the optical waveguides. High-precision position adjustment of this kind on the minute optical waveguides is extremely difficult and hinders productivity improvements. Furthermore, because the positive and negative electrodes are formed in alignment on the same surface of the crystal substrate, a phenomenon (DC drift) is generated in which the operation voltage fluctuates due to the presence of the buffer layer between both electrodes, and this presents a significant problem in terms of actual application.

In that document a device is therefore described which allegedly solves these problems. In the described device a pair of optical waveguides, formed on the surface of a z-cut lithium niobate crystal substrate, perform a mutual exchange of wave energy in a coupling area of the substrate. The z axis directions of the crystal, from which the optical waveguides are formed, are formed in mutually reverse directions, and opposing and parallel flat-plate positive and negative electrodes are arranged in the upper and lower surfaces of the crystal substrate. Based on this configuration, by the action of a linear, uniform and parallel electric field formed between the opposing flat-plate electrodes, an action in the respective reverse directions with respect to the z axis of the optical waveguides is effected.

According to that document, by virtue of the fact that the structure of the electrodes is an opposing structure, in between which there is a dielectric, the DC drift phenomenon, which is generated between the electrodes and constitutes a problem of the prior-art devices, can be suppressed.

In view of the state of the art discussed, it has been an aim of the Applicant to find a solution to the problem of DC drift which did not depend on the presence of electrodes and/or the provision of layers of materials having the property of being conductive at the low frequencies, but non-conductive at the frequencies of the modulating fields.

According to one aspect of the invention, an integrated optical waveguide device is provided comprising a substrate of a ferroelectric material and at least one waveguide integrated in the substrate in correspondence of a surface thereof.

The at least a longitudinal waveguide section of the at least one waveguide is formed in a respective first substrate region having a first orientation of spontaneous polarization.

The first substrate region is sandwiched between at least two second substrate regions which have a second orientation of spontaneous polarization, opposite to said first orientation, and are located at opposite sides of the waveguide section with respect to the longitudinal direction thereof.

At least two longitudinally consecutive longitudinal waveguide sections of the at least one waveguide may be formed in respective first substrate regions having alternated orientations of spontaneous polarization. Each of said first substrate regions is sandwiched between at least two respective second substrate regions which have an orientation of spontaneous polarization opposite to that of the first substrate region and are located at opposite sides of the respective waveguide section with respect to the longitudinal direction thereof.

In one embodiment, the device comprises two waveguides. At least a corresponding longitudinal waveguide section of the two waveguides is formed in a common first substrate region having a first orientation of spontaneous polarization, sandwiched between at least two second substrate regions which have a second orientation of spontaneous polarization opposite to the first orientation and are located at opposite sides of the two waveguide sections with respect to the longitudinal direction thereof.

In another embodiment, the device comprises two waveguides, and at least a corresponding longitudinal waveguide section of the two waveguides is formed in two respective first substrate regions having mutually opposed orientations of spontaneous polarization. The two first substrate regions are sandwiched between at least two second substrate regions which are located at opposite sides of the waveguide sections with respect to the longitudinal direction thereof and have orientations of spontaneous polarization such as to form, transversally to the waveguide sections, a pattern of alternated orientations of spontaneous polarization.

The two first substrate regions may be adjacent to each other transversally to the waveguide sections.

Alternatively, between the two first substrate regions at least two third substrate regions are sandwiched. The two third substrate regions have orientations of spontaneous polarization such as to form, together with the first and second substrate regions and transversally to the waveguide sections, a pattern of alternated orientations of spontaneous polarization.

The two waveguides may form two arms of a Mach-Zehnder electro-optical interferometric modulator.

In one embodiment, the Mach-Zehnder electro-optical interferometric modulator has a co-planar waveguide ("CPW") driving electrode arrangement.

Alternatively, the Mach-Zehnder electro-optical interferometric modulator has a co-planar strip ("CPS") driving electrode arrangement.

Preferably, the arrangement and dimensions of the first and second substrate regions transversally to the at least one longitudinal waveguide section are such that a component in the direction of spontaneous polarization of the ferroelectric material substrate of the electric field generated by free or polarization charges changes sign across the waveguide section.

The features and advantages of the present invention will be made apparent by the following detailed description of some embodiments thereof, provided merely by way of non-limiting example and illustrated in the annexed drawings, wherein:
Figure 1 is a simplified top-plan view of an integrated optical waveguide device according to a first embodiment of the present invention;
Figure 2 is a simplified cross-sectional view taken along line II-II in Figure 1;
Figures 3 and 4 are cross-sectional views similar to that of Figure 2 showing the distribution of the z and x components, respectively, of the electric field in the device;
Figure 5 is a simplified top-plan view of an integrated optical waveguide device according to a second embodiment of the present invention;
Figure 6 is a simplified cross-sectional view of an integrated optical waveguide device according to a third embodiment of the invention;
Figures 7 and 8 show the distribution of the z and x components, respectively, of the electric field in the device of Figure 6, for a first device dimensioning;
Figures 9 and 10 show the distribution of the z component of the electric field in the device of Figure 6, respectively for a second and a third device dimensioning;
Figure 11 is a simplified cross-sectional view of an integrated optical waveguide device according to a fourth embodiment of the present invention;
Figure 12 shows the distribution of the z component of the electric field in the device of Figure 11;
Figure 13 is a simplified cross-sectional view of an integrated optical waveguide device according to a fifth embodiment of the present invention;
Figure 14 shows the distribution of the z component of the electric field in the device of Figure 13;
Figure 15 is a simplified cross-sectional view of an integrated optical waveguide device according to a sixth embodiment of the present invention;
Figure 16 shows the distribution of the z component of the electric field in the device of Figure 15;
Figure 17 is a simplified cross-sectional view of an integrated optical waveguide device according to a seventh embodiment of the present invention, and
Figure 18 shows the distribution of the z component of the electric field in the device of Figure 17.

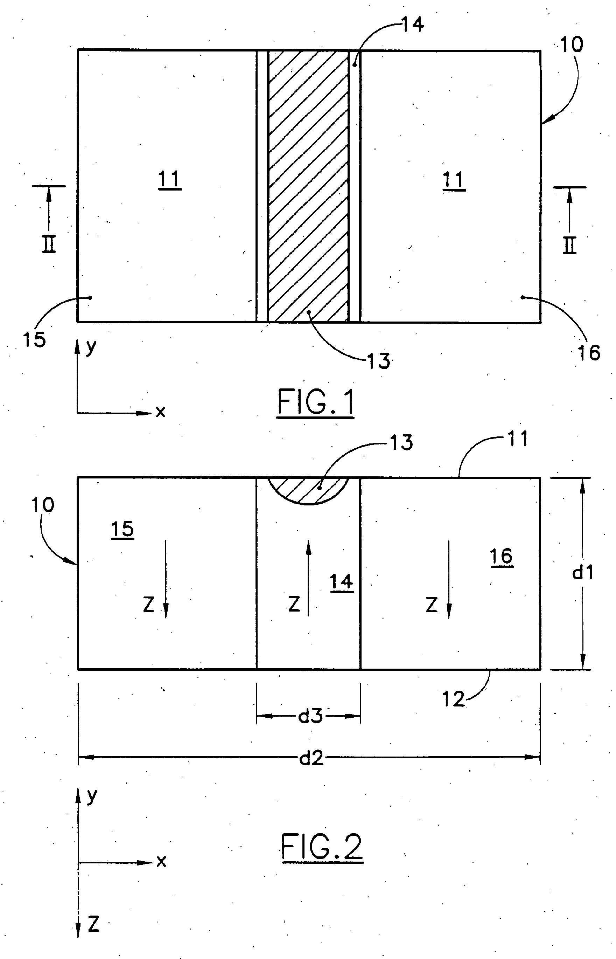

Referring to the drawings, in Figures 1 and 2 an integrated optical waveguide device according to a first embodiment of the present invention is shown in simplified top-plan and cross-sectional views, respectively. The integrated optical waveguide device comprises a substrate **10** of a ferroelectric material, such as lithium niobate or lithium tantalate or other known or suitable ferroelectric materials, cut perpendicularly to the z crystal axis, that is, having major surfaces **11, 12** orthogonal to the z crystal axis. In the drawings, the two possible orientations of the z axis, identifying two possible orientations of spontaneous polarization of the ferroelectric material, are shown, one in solid line and the other in phantom.

An optical waveguide **13** is integrated by conventional techniques in the substrate **10** in correspondence of one **11** of the major surfaces thereof; in the shown example, the waveguide **13** extends in the direction of the y crystal axis, but this is not to be intended as a limitation, since the waveguide could extend in any direction in the plane of surface **11.**

The waveguide **13** is formed in a substrate region **14** which extends in the same direction as, that is longitudinally to, the waveguide and constitutes a single ferroelectric domain crystal region in which the ferroelectric domain, and thus the z crystal axis, has a first orientation, for example the "up" orientation indicated in the drawing by an arrow pointing towards the upper substrate surface **11.**

On both sides of the substrate region **14** which extend longitudinally to the waveguide **13,** two substrate regions **15, 16** are provided, each of which constitutes a single ferroelectric domain crystal region in which the ferroelectric domains have a second orientation, opposite compared to the region **14,** for example the "down" orientation indicated in the drawing by an arrow pointing towards the lower substrate surface **12.**

In the shown example, the regions **15** and **16** are substantially coextensive to the region **14** in the longitudinal direction of the waveguide **13.** In other words, the substrate region **14** in which the waveguide **13** is formed is sandwiched between the two regions **15** and **16.**

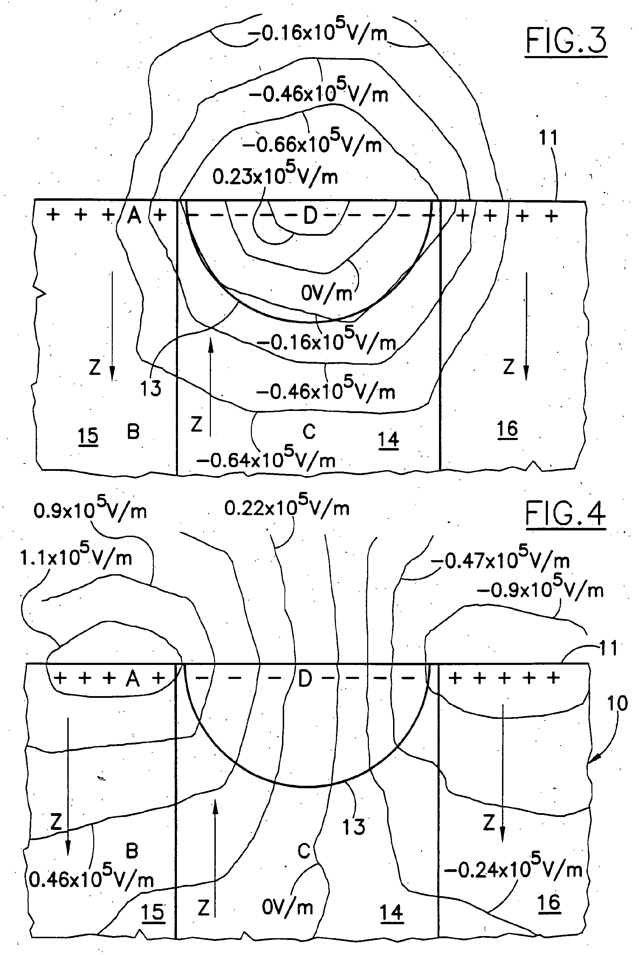

Figures 3 and 4 show the distribution of the z and x components Ez and Ex, respectively, of the electric field which results from numerical calculations conducted by the Applicant on the structure of Figures 1 and 2, assuming a temperature change of one K degree (creation of polarization charges due to the pyroelectric effect). The calculations have been conducted considering a finite substrate **10** in the directions of the x and z crystal axis, whereas the system is considered for simplicity uniform along the y direction. In this way the problem to be analysed is two-dimensional and the calculations are strongly simplified; the results are however still valid as long as the substrate length along the y axis is significantly larger than the waveguide region **14** and substrate **10** thickness **d1.** Also, the electric potential, as well as the electric field, are assumed to be zero at a distance significantly larger than the substrate dimensions.

The substrate material is assumed to be LiNbO₃, with relative dielectric permittivities exx=44 and ezz=28. The substrate dimensions are the following:
substrate thickness **d1**:1 mm;
substrate width **d2:** 2.4 mm;
waveguide region width **d3:** 10 µm (this value is suitable to define a waveguide under the surface in this region),
and the device is supposed to be immersed in air.

In the structure of Figure 2 let four points be considered: point **A** is located just under the interface between the substrate **10** and air and in between the two oppositely oriented ferroelectric domain crystal regions **14, 15;** point **D** is under said interface and in the middle of the waveguide region **14;** point **B** is 8 µm far from point **A** on the same vertical line; the same for point **C** with respect to point **D.** The locations of these four points are approximately indicated in Figures 3 and 4.

The following table shows the values obtained for the components Ex and Ez at the points **A, B, C** and **D:**

| Point | Ex (V/m) (Fig. 4) | Ez (V/m) (Fig. 3) |
|---|---|---|
| A | 110120 | -22527 |
| B | 26139 | -80491 |
| C | ≈0 | -65022 |
| D | ≈0 | 45771 |

Thanks to the presence of the two substrate regions **15** and **16** having ferroelectric domains oppositely oriented compared to the substrate region **14,** charges of opposite sign (indicated as **+** and **-** in the drawings) at the interface between the substrate material and air are present. In particular, while at the surface of region **14** negative charges exist, the charges at the surface of regions **15** and **16** are positive.

The presence of charges of opposite sign significantly reduces the Ez component of the electric field with respect to the case where the regions **15** and **16** are absent.

In addition, the Ez component of the electric field changes sign across the waveguide, that is across the propagating optical mode. This means that by providing the two inverted ferroelectric domain substrate regions **15** and **16,** a suitable geometry can be designed so that the effective refractive index change Δn, which also takes account of the overlap integral between the guided optical mode and the distribution of the Ez electric field component, is much smaller (up to two orders of magnitude) than that obtainable in the case where the regions **15, 16** were absent.

A further beneficial effect which can be desumed from Figures 3 and 4 is the presence of a very strong Ex component and an external Ez component of the electric field. The Ex component induces surface currents which produce charge separation, i.e. free charges on the surface of opposite sign with respect to the aforesaid mentioned buried (close to the surface) charges generated by a change in polarization. The external Ez component attracts ionised charges and/or electrons from the environment surrounding the device, also giving rise to a neutralization process in the waveguide region. Both the Ex and Ez components can also induce bulk conduction in the substrate, thus producing a screening effect. The above mechanisms reduce or even cancel the Ez component in the waveguide region.

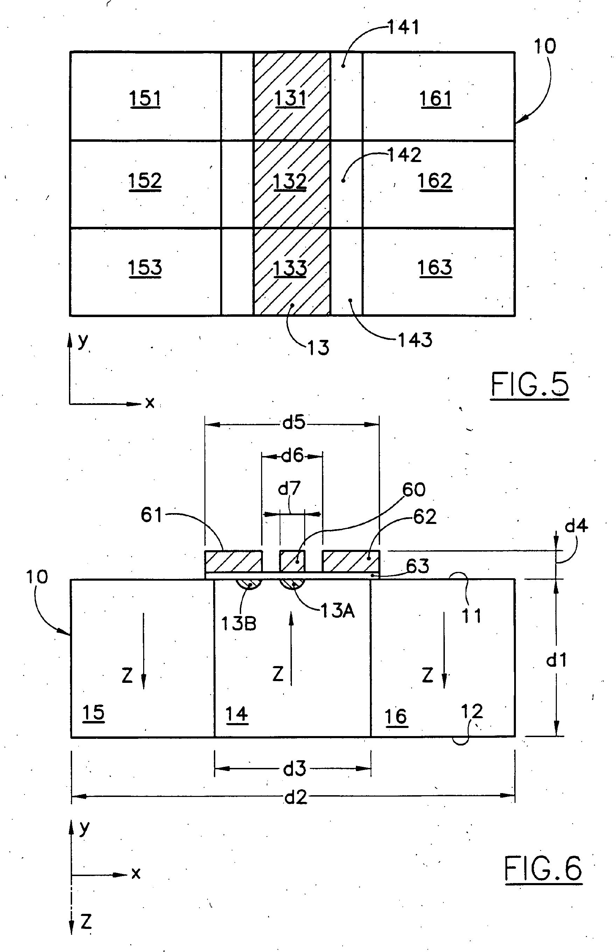

In Figure 5 another embodiment of the present invention is shown in a simplified top-plan view similar to that of Figure 1. This embodiment could be viewed as an expansion of the structure shown in Figure 1 in the direction of extension of the waveguide **13,** in the example coincident with the y crystal axis direction. A first longitudinal section **131** of the waveguide **13** is formed in a first substrate region **141** in which the ferroelectric domain has a first orientation, for example the "up" orientation; the first substrate region **141** is sandwiched between two second substrate regions **151, 161** with ferroelectric domain orientations reversed with respect to region **141.** A second longitudinal section **132** of the waveguide **13** is formed in a third substrate region **142** with ferroelectric domain orientation opposite to that of region **141,** that is coincident to the ferroelectric domain orientation of regions **151** and **161.** The third substrate region **142** is sandwiched between two fourth substrate regions **152, 162** with ferroelectric domain orientation reversed with respect to region **142,** that is coincident with respect to the first substrate region **141.** A third longitudinal section **133** of the waveguide **13** is formed in a fifth substrate region **143** with ferroelectric domain orientation coincident to that of region **141,** sandwiched between two sixth substrate regions **153, 163** with ferroelectric domain orientation coincident to that of regions **151, 161.**

The pattern of substrate regions of Figure 5 may be extended further in the longitudinal direction of the waveguide **13,** or it can be reduced by leaving only regions **141, 151, 161, 142, 152, 162.**

The provision of a repeated, periodical pattern such as that shown in Figure 5 can enhance the effect of reduction of the Ez electric field components.

Figure 6 shows in simplified cross-sectional view an integrated optical waveguide device according to a third embodiment of the invention. More specifically, the device according to this embodiment comprises two waveguides **13A, 13B,** extending generally parallelly to each other, in the example along the y crystal axis direction of the substrate **10.** The two waveguides **13A, 13B.**

In the example depicted in Figure 6 the two waveguides **13A, 13B** are the arms of a two-arms Mach-Zehnder type interferometric electro-optical intensity modulator. More specifically, the structure of Figure 6 is that of a coplanar waveguide ("CPW") Mach-Zehnder interferometric modulator, with a hot electrode **60** superimposed over one of the interferometer arms, for example waveguide **13A,** and two ground electrodes **61, 62,** one of which superimposed over the other interferometer arms, in the example waveguide **13B.** A buffer layer **63** of silicon dioxide is conventionally interposed between the electrodes **60, 61, 62** and the substrate surface **11** in correspondence of which the waveguides **13A, 13B** are integrated.

The waveguides **13A, 13B** are formed in a first substrate region **14** constituting a single ferroelectric domain crystal region in which the ferroelectric domain has a first orientation, for example the "up" orientation. The substrate region **14,** which in this example are coextensive to the waveguides **13A, 13B,** is sandwiched between two second substrate regions **15, 16,** also constituting single ferroelectric domain crystal regions, in which the ferroelectric domains are aligned to the z crystal axis but have a second orientation, opposite to that of region **14**, for example the "down" orientation.

The Applicant has conducted numerical calculations on the structure of Figure 6 for different values of the dimension **d3,** that is the width of the central substrate region **14,** to analyse the dependence on this parameter of the electric field in the waveguide regions.

For the sake of simplicity, the calculations have been conducted supposing that the metal electrodes **60, 61, 62** are grounded. In other words, the potential of the metal electrodes was set to zero (the same value as that at distances much larger than the substrate size). In this way, the variation on the electric field distribution due to any charge separation (*i.e.* polarization changes in the LiNbO₃ ferroelectric domains) has been analysed. Given the linearity of the problem, any externally applied potential on the electrodes (for example the modulating voltages which ensure the functionality of the device), would not modify the variations on the electric field distribution calculated for grounded electrodes. In other words, the aim of the numerical calculations has been to find a value of dimension **d3** for which the contribution to the refractive index change due to any charge separation is as close as possible to zero: this means that the DC drift in the working point of the device will be negligible.

The numerical calculations have been conducted on a structure having the following dimensions:
substrate thickness **d1:** 1 mm;
substrate width **d2:** 2.4 mm;
overall thickness **d4** of the stack of the buffer layer and electrodes: 30 µm;
dimension **d5:** 1 mm;
width of the gap between the ground electrodes **d6:** 57 µm;
width of the hot electrode **d7:** 9 µm.

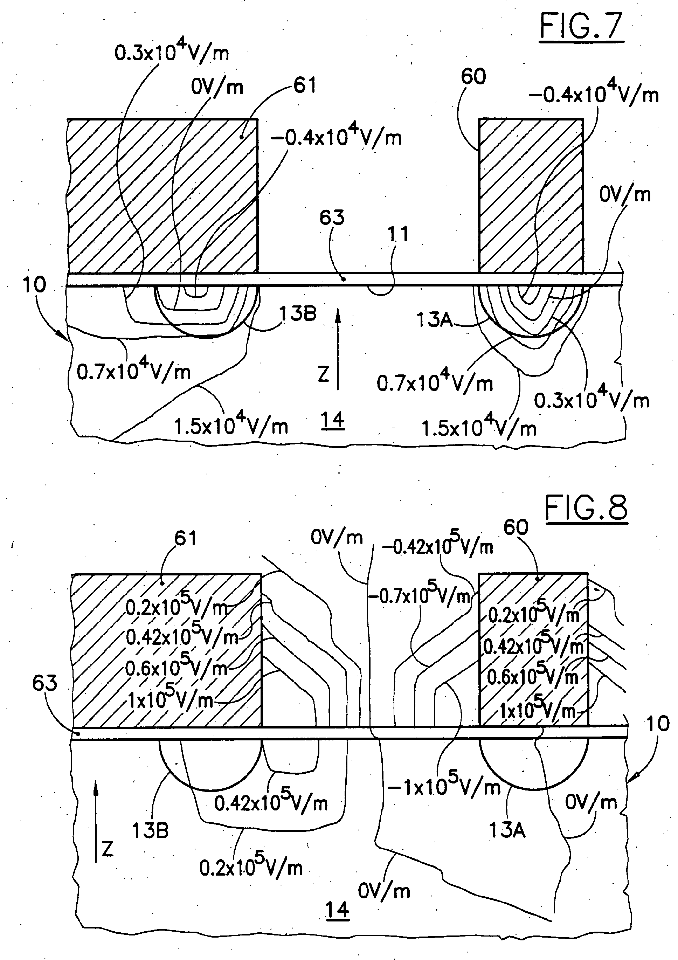

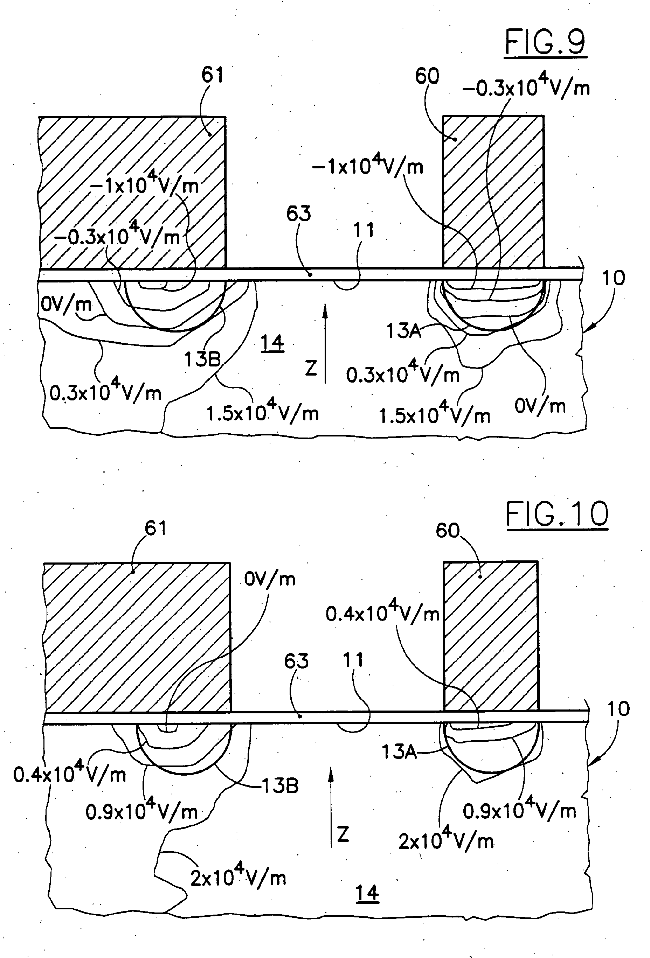

Figures 7 to 10 show the distribution of the electric field resulting from the calculations assuming a temperature change of one K degree. Specifically, Figures 7 and 8 show the values of the z and x components Ez, Ex of the electric field calculated for a value of dimension **d3** equal to 1.02 mm. Figures 9 and 10 show the values of the z component Ez of the electric field for a value of dimension **d3** of 1 mm and 1.04 mm, respectively.

The calculations conducted show that, while in the case of a single domain structure (i.e. a structure in which the dimension **d3** is 2.4 mm, that is the central substrate region **14** has the same width as the substrate **10,** and the regions **15** and **16** are absent), due to the pyroelectric effect, the amplitude of the electric field component Ez in the z direction varies between 1.5 and 1.6 x 10⁵ V/m in the waveguide regions, for each K degree of temperature variation (this temperature variation is supposed to be uniform over the chip volume), and there is a tangential electric field component Ex, lower than or equal to 10⁴ V/m, the provision of the two regions **15, 16** with ferroelectric domains inverted with respect to the central region **14** makes the situation quite different.

By changing the width **d3** of the central domain region **14** it is possible to achieve a situation in which the component Ez in the waveguide regions is very much reduced and changes sign across the mode profile. For the configuration proposed this happens for values of **d3** close to 1.02 mm: as shown in Figure 7, the amplitude of the electric field component Ez is in this case always below 1.5x10⁴ V/m, : a value one order of magnitude less than that for the single domain case, and changes sign across the waveguide modes, thus reducing even further the effective index change which also takes account of the overlap integral between the waveguide mode and the electric field.

In addition to this already beneficial result, a strong tangential electric field component Ex develops, as shown in Figure 8. The Ex electric field component produces surface charge neutralization, as well as bulk conduction in the substrate, as described earlier for the embodiment of Figure 1, and helps in reducing the effects of free or polarization charges in the substrate material.

If the value of dimension **d3** is changed, so does the electric field distribution in the waveguide regions. This is shown in Figures 9 and 10, which respectively correspond to values of **d3** of 1 mm and 1.04 mm. In the case of dimension **d3** = 1 mm, the amplitude of the component Ez still remains below 1.5x10⁴ V/m, but it is negative over most of the waveguide regions. In the case of dimension **d3** = 1.04 mm, the amplitude of the component Ez still remains below 1.5x10⁴ V/m, but it is positive over most of the waveguide regions.

Since the waveguide modes are fundamental (i.e. even parity) it is clear that a situation closer to that obtained for dimension **d3** = 1.02 mm (where the Ez component changes from positive to negative across the optical guided modes) ensures an effective index change much closer to zero, *i.e.* much lower than that for the single domain case.

The numerical calculations conducted by the Applicant have shown that the distribution of the Ex component does not depend significantly on the value of dimension **d3,** at least as far as it remains in the range 1 mm to 1.04 mm.

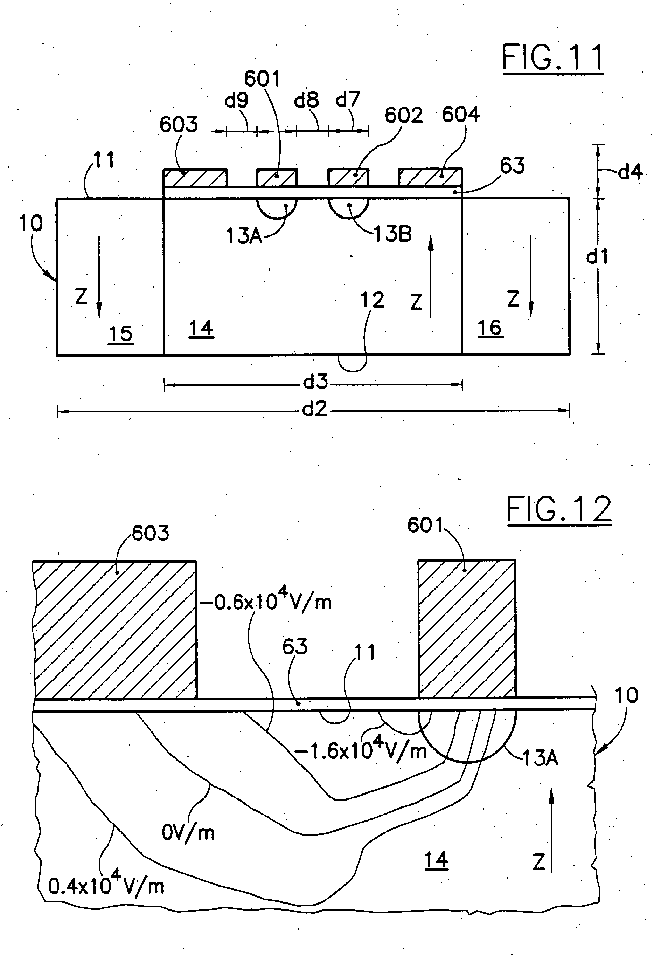

Further embodiments of the present invention are schematically depicted in Figures 11, 13, 15 and 17. All these embodiments relates to a double coplanar strip ("CPS") Mach-Zehnder interferometric intensity modulator. Similarly to the CPW Mach-Zehnder interferometric modulator of Figure 6, this device comprises two waveguides **13A, 13B,** each one located under a respective hot electrode **601, 602.** Ground electrodes **603** and **604** extend aside the pair of hot electrodes **601, 602.** A buffer layer **63** of silicon dioxide is interposed between the electrodes and the surface **11** of the substrate **10** in correspondence of which the waveguides are integrated.

In the embodiment of Figure 11, similarly to that of Figure 6, the two waveguides **13A** and **13B** are formed in a first substrate region **14** constituting a single ferroelectric domain crystal region in which the ferroelectric domain, and thus the z crystal axis, has a first orientation, for example the "up" orientation indicated in the drawing by an arrow pointing towards the upper substrate surface **11.** The first substrate region **14,** which extends transversally to the waveguides under the ground electrodes **603** and **604,** is sandwiched between two second substrate regions **15, 16,** constituting two single ferroelectric domain crystal regions in which the ferroelectric domain, and thus the z crystal axis, has a second orientation opposite orientation compared to the region **14,** for example the "down" orientation indicated by arrows pointing towards the lower substrate surface **12.**

Figure 12 shows the distribution of the z component Ez of the electric field calculated for the structure of Figure 11, assuming a temperature change of one K degree and the following dimensions:
substrate thickness **d1:** 1 mm;
substrate width **d2:** 2.4 mm;
waveguide region **14** width **d3** (assumed coincident with the overall width of the electrode system): 1mm;
buffer layer and electrode stack overall thickness **d4:** 30 µm;
hot electrode width **d7:** 9 µm;
width **d8** of the gap between the hot electrodes: 60 µm;
width **d9** of the gap between a hot electrode and the adjacent ground electrode: 20 µm,
the other dimensions being the same as those for the structure of Figure 6. It can be desumed that the Ez component is at least one order of magnitude lower than that which will be obtained should the regions **15** and **16** be absent. Additionally, the Ez component changes sign across the waveguide.

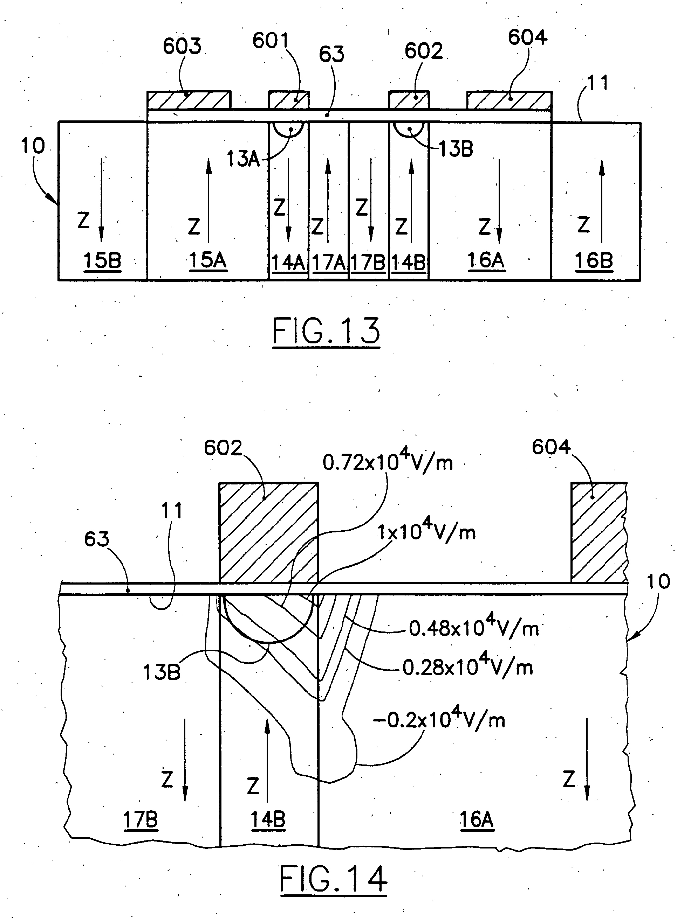

Differently from the embodiment of Figure 11, the embodiments of Figures 13, 15 and 17 do not need opposite polarity driving voltages to be applied to the driving electrodes. In fact, the push-pull effect is assured by the fact that the waveguides are formed in mutually oppositely oriented ferroelectric domain regions.

In the embodiment of Figure 13, the two waveguides **13A** and **13B** are formed in respective substrate regions **14A** and **14B,** having mutually opposite ferroelectric domain orientations. Two substrate regions **17A** and **17B,** extending in the longitudinal direction of the waveguides, are provided in between the regions **14A** and **14B.** The region **17A,** which is adjacent to and has ferroelectric domain orientation opposed with respect to the region **14A**, and the same holds for the regions **17B** and **14B.**

Regions **14A** and **14B** are substantially coextensive in the transversal direction of the waveguides to the respective hot electrodes **601** and **602.** The regions **14A** and **14B** are in turn sandwiched between two substrate regions **15A** and **16A,** which have ferroelectric domain orientations opposite to the respective region **14A, 14B** adjacent thereto and extend to the outer edge of the ground electrodes **603, 604.** The regions **15A** and **16A** are in turn sandwiched between two further substrate regions **15B, 16G,** having ferroelectric domain orientations opposite to the respective region **14A, 14B** adjacent thereto.

Figure 14 shows the distribution of the z component Ez of the electric field calculated for the structure of Figure 13, assuming a temperature change of one K degree and dimensions equal to those used for carrying out the numerical calculations on the structure of Figure 11. Only one waveguide region is shown in Figure 13; the results for the other waveguide region are coincident, provided the sign of the Ez component is reversed.

It is possible to see that the Ez component is at least one order of magnitude lower than that achievable should the substrate **10** have only one ferroelectric domain. However, differently from the structure of Figure 11, the Ez component does not change sign across the waveguide.

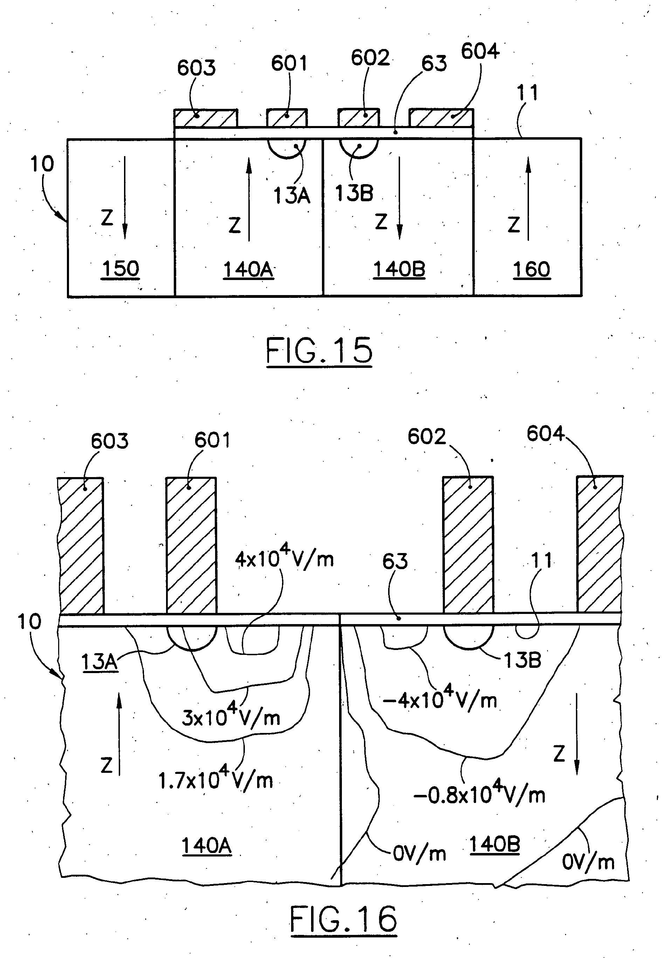

In the embodiment of Figure 15 the two waveguides **13A** and **13B** are each formed in a respective substrate region **140A** and **140B** in which the ferroelectric domains have mutually opposed orientations. The boundary between the two substrate regions **140A and 140B** is located substantially midway between the waveguides **13A, 13B,** and each of said regions extends transversally to the waveguides under the ground electrode **603, 604** which is adjacent the hot electrode **601, 602** superimposed over the waveguide **13A, 13B** contained therein. The substrate regions **140A** and **140B** are sandwiched between two further substrate regions **150, 160,** each having ferroelectric domain orientation opposite to that of the adjacent substrate region **140A, 140B.**

Figure 16 shows the distribution of the z component Ez of the electric field calculated for the structure of Figure 13, still assuming a temperature change of one K degree and dimensions equal to those used for carrying out the numerical calculations on the structure of Figure 11.

It is possible to see that the Ez component is at least one order of magnitude lower than that achievable should the substrate **10** have only one ferroelectric domain. However, differently from the structure of Figure 11, the Ez component does not change sign across the waveguide.

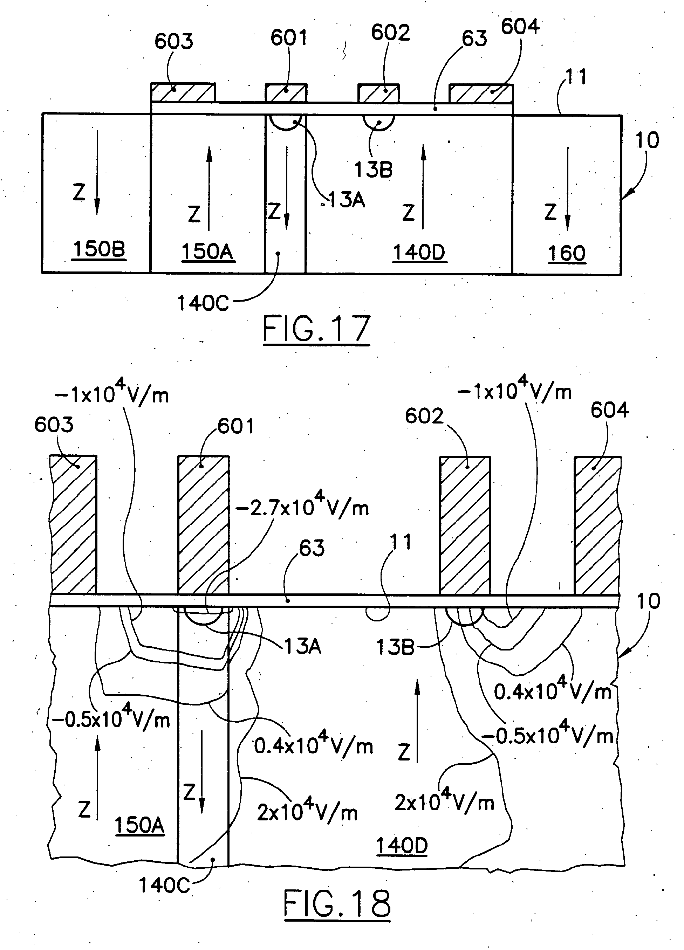

In the embodiment of Figure 17 the two waveguides **13A** and **13B** are each formed in a respective substrate region **140C** and **140D** in which the ferroelectric domains have mutually opposed orientations. While region **140C** has a width substantially corresponding to that of the hot electrode **601,** region **140D** extend under the ground electrode **604.** A substrate region **150A** extends laterally from the boundary of region **140C** to the outer edge of the ground electrode **603,** and has ferroelectric domains oriented oppositely with respect to region **140C.** Regions **150A, 140C** and **140D** are sandwiched between two further substrate regions **150B** and **160** having ferroelectric domains oriented oppositely with respect to regions **150A** and **140D.**

Figure 18 shows the distribution of the z component Ez of the electric field calculated for the structure of Figure 17, once again assuming a temperature change of one K degree and dimensions equal to those used for carrying out the numerical calculations on the structure of Figure 11.

It is possible to see that the Ez component is at least one order of magnitude lower than that achievable should the substrate **10** have only one ferroelectric domain. However, while the Ez component changes sign across the waveguide **13B,** it remains of the same sign across the waveguide **13A.**

All the embodiments described hereinbefore are merely illustrative examples of the possible practical implementations of the present invention, and it is intended that other configurations with different substrate dimensions, materials, location and dimensions of domain inverted regions may be envisaged. For example configurations, where differently oriented domains are closer to the waveguide regions may ensure better local compensation, which is useful for example when there is a non uniform temperature drift.

Also, the structures depicted in Figures 6, 11, 13, 15 and 17 could be expanded in the direction of extension of the waveguides in the way depicted in Figure 6.

Concerning the method of formation of the differently oriented ferroelectric domain crystal regions, various techniques of domain inversion have already been reported which allow to fabricate LiNbO₃ crystals including regions of different polarity, thus presenting reversal of those properties which are dependent on the direction and orientation of the z crystal axis.

Some methods for achieving ferroelectric domain inversion rely on the diffusion of ions at high temperature, close to the crystal Curie point.

As reported for example in N. Ohnishi, 'An etching study on a heat-induced layer at the positive-domain surface of LiNbO₃', Jap. J. Appl. Phys., vol.16, p.1069 (1977), Li₂O outdiffusion at the z+ face of a LiNbO₃ crystal heated between 800-1100 °C for 1 to 20 hours can induce domain inversion.

In S. Miyazawa, 'Ferroelectric domain inversion in Ti-diffused LiNbO₃ optical waveguide', J. Appl. Phys., vol. 50, p. 4599 (1979) it is reported that Ti-indiffusion, carried out at 950-1100 °C in air for 5 to 10 hours, can produce ferroelectric domain inversion on the z+ substrate surface.

K. Nakamura and H. Shimizu, 'Ferroelectric inversion layers formed by heat treatment of proton-exchanged LiTaO₃', Appl. Phys. Lett., vol. 56, p. 1535 (1990) reported that proton exchange followed by heat treatment close to the Curie temperature allowed ferroelectric domain inversion on the z+ face of LiNbO₃.

Cladding of SiO₂ followed by a heat treatment near the Curie temperature for several hours has also been used to stimulate Li₂O outdiffusion in LiNbO₃, as reported in M. Fujimura et al. 'Ferroelectric-domain inversion induced by SiO₂ cladding for LiNbO₃ waveguide SHG', Electronics Lett., vol. 27, p.1207 (1991), and ferroelectric domain inversion occurs on the z+ substrate surface under the coated area.

In L. Huang and N.A.F. Jaeger, 'Discussion of domain inversion in LiNbO₃', Appl. Phys. Lett., vol. 65, p. 1763 (1994) a simple model has been proposed in which ferroelectric domain inversion is associated to the space-charge field of a few hundred volts per centimetre resulting from NbLi defects and free electrons, which are produced by Li₂O outdiffusion at high temperature.

Another method to achieve ferroelectric domain inversion in LiNbO₃ and LiTaO₃, discussed for example in P.W. Haycock and P.D. Townsend, 'A method of poling LiNbO₃ and LiTaO₃ below Tc', Appl. Phys. Lett., vol. 48, p. 698 (1986), is based on the use of an electron beam. The first attempts were carried out at temperatures of about 600 °C (LiNbO₃) using small electric-fields of the order of 10 V/cm. The idea was that the oxygen ions combine in a molecular state smaller than the original single-ion state, making easier for the lithium ions to cross to the other side of the oxygen plane.

Any of the known ferroelectric domain inversion or poling techniques could in principle be used to form the ferroelectric domain regions provided for by the present invention.

However, the regions of ferroelectric domain inversion obtained by diffusion of ions at high temperature are usually shallow (to a few microns depth below the surface), thus suitable only for waveguide applications. In addition they can suffer from the fact that the domain shape is triangular (Ti indiffusion, Li₂O outdiffusion, SiO₂ cladding) or semicircular (proton exchange followed by heat treatment) giving sometimes a non-optimised overlap between the inverted region and the waveguide modes. The electron-beam irradiation technique can produce straight domains over the whole sample thickness (0.1-1 mm), giving the potential for improving the aforesaid overlap.

Other methods have been used to obtain ferroelectric domain inversion, including doping during Czochralski growth and laser heated pedestal crystal growth.

The most efficient poled devices to date have been obtained using the technique of electric field poling at room temperature, as discussed for example in M. Yamada et al., 'First-order quasi-phase-matched LiNbO₃ waveguide periodically poled by applying an external field for efficient blue second-harmonic generation', Appl. Phys. Lett., vol. 62, p. 435 (1993). High voltage pulses are applied to the z-cut substrate, so that the external electric fields are above the coercive field value (about 20 kV/mm for LiNbO₃), corresponding to which domain inversion occurs. The electric field poling technique allows to obtain straight domains over the whole thickness with a high degree of resolution (a few microns, as it has been shown by the periods fabricated for some quasi-phase-matched frequency conversion processes). In addition it is simpler and cheaper compared to the other methods.

As far as the thickness of inverted and non-inverted ferroelectric domain regions is concerned, it is not essential that such regions extend down to the bottom surface of the substrate. Referring for example to Figure 3, it is sufficient that the thickness of regions **14, 15** and **16** is larger than the width of region **14.**

The various substrate regions can be formed before or after the formation of the waveguides.

It is to be noted that albeit in the embodiments discussed hereinbefore only the effects of polarization charges created by the pyroelectric effect have been taken into consideration, same conclusions can be reached also in the case polarization charges created by the piezoelectric effect or free charges created by the photovoltaic effect are considered.

Although the present invention has been disclosed and described by way of some embodiments, it is apparent to those skilled in the art that several modifications to the described embodiments, as well as other embodiments of the present invention are possible without departing from the scope thereof as defined in the appended claims.

## Claims

1. Integrated optical waveguide device comprising:
- a substrate **(10)** of a ferroelectric material;
- at least one waveguide **(13;13A,13B)** integrated in the substrate in correspondence of a surface **(11)** thereof;
- at least a longitudinal waveguide section **(13;131,132,133;13A,13B)** of the at least one waveguide being formed in a respective first substrate region **(14;141,142,143;14A,14B;140A,140B;140C,140D)** having a first orientation of spontaneous polarization,
**characterized in that**
said first substrate region is sandwiched between at least two second substrate regions **(15,16;151,161,152,162,153,163;15A,15B,17A,17B,16A,16B;150,1 60)** which have a second orientation of spontaneous polarization, opposite to said first orientation, and are located at opposite sides of the waveguide section with respect to the longitudinal direction thereof.

2. Integrated optical waveguide device according to claim 1, in which at least two longitudinally consecutive longitudinal waveguide sections **(131,132,133)** of the at least one waveguide **(13)** are formed in respective first substrate regions **(141,142,143)** having alternated orientations of spontaneous polarization, each of said first substrate regions being sandwiched between at least two respective second substrate regions **(151,161,152,162,153,163)** which have an orientation of spontaneous polarization opposite to that of the first substrate region and are located at opposite sides of the respective waveguide section with respect to the longitudinal direction thereof.

3. Integrated optical waveguide device according to claim 1 or 2, comprising two waveguides **(13A,13B),** at least a corresponding longitudinal waveguide section of the two waveguides being formed in a common first substrate region **(14)** having a first orientation of spontaneous polarization, sandwiched between at least two second substrate regions **(15,16)** which have a second orientation of spontaneous polarization opposite to the first orientation and are located at opposite sides of the two waveguide sections with respect to the longitudinal direction thereof.

4. Integrated optical waveguide device according to claim 1 or 2, comprising two waveguides **(13A,13B),** at least a corresponding longitudinal waveguide section of the two waveguides being formed in two respective first substrate regions **(14A,14B;140A,140B;140C;140D)** having mutually opposed orientations of spontaneous polarization, sandwiched between at least two second substrate regions **(15A,15B,17A,17b,16A,16B;150,160;150A,150B,160)** which are located at opposite sides of the waveguide sections with respect to the longitudinal direction thereof and have orientations of spontaneous polarization such as to form, transversally to the waveguide sections, a pattern of alternated orientations of spontaneous polarization.

5. Integrated optical waveguide device according to claim 4, in which the two first substrate regions are adjacent to each other transversally to the waveguide sections.

6. Integrated optical waveguide device according to claim 4, in which between the two first substrate regions at least two third substrate regions **(17A,17B)** are sandwiched having orientations of spontaneous polarization such as to form, together with the first and second substrate regions and transversally to the waveguide sections, a pattern of alternated orientations of spontaneous polarization.

7. Integrated optical waveguide device according to any one of claims 3 to 6, in which the two waveguides form two arms of a Mach-Zehnder electro-optical interferometric modulator.

8. Integrated optical waveguide device according to claim 7, in which the Mach-Zehnder electro-optical interferometric modulator has a co-planar arrangement of driving electrodes **(60-62;601-604)** located in correspondence of said substrate surface.

9. Integrated optical waveguide device according to claim 8, in which the Mach-Zehnder electro-optical interferometric modulator has a co-planar waveguide driving electrode arrangement **(60-62).**

10. Integrated optical waveguide device according to claim 8, in which the Mach-Zehnder electro-optical interferometric modulator has a co-planar strip driving electrode arrangement **(601-604).**

11. Integrated optical waveguide device according to any one of the preceding claims, in which the arrangement and dimensions of the first and second substrate regions transversally to the at least one longitudinal waveguide section are such that a component in the direction of spontaneous polarization of the ferroelectric material substrate of the electric field generated by free or polarization charges changes sign across the waveguide section.
